# EUROPEAN PATENT APPLICATION

(11) **EP 2 991 033 A1**
(43) Date of publication of application: **02.03.2016**
(21) Application number: 14182152.0
(22) Date of filing: 25.08.2014
(51) Int. Cl.: G06T 7/00

(54) **System and method for three-dimensional shape generation from closed curves**

(71) Applicant: Swissmeda AG, 8005 Zürich (CH)
(72) Inventor: Schmälzle, Stefan, 8911 Rifferswil (CH)
(74) Representative: Liebetanz, Michael

(57) **Abstract**

A method for three-dimensional shape generation from views comprises the steps of providing at least two two-dimensional images encompassing and showing the object to be represented within said three-dimensional shape (10). Then based on the two-dimensional images the three-dimensional shape (10) of the object (41) to be represented is calculated. There is one set of closed curves (20 to 24) in every plan, wherein the method further comprises the steps of estimating for each of the closed curves (20 to 24) initial surface normals, regularizing every closed curve (20 to 24), using of a radial basis function to define an implicit form of the volume as a zero set of the signed distance function defined by the curves and normals; and polygonalizing said zero set by providing e.g. marching tetraheadrons in the bounding box of the curves yielding a clipped or naturally bounded volume (12)

## Description

### TECHNICAL FIELD

The present invention relates to a system and method for three-dimensional shape generation from closed curves, especially closed curves defined in planar slice images called views, comprising the steps of: providing at least two, preferably two-dimensional, images encompassing and showing the object to be represented within said three-dimensional shape, and calculating based on the closed curves derived from, preferably two-dimensional, images the three-dimensional shape of the object to be represented.

### PRIOR ART

Such a system having the features of the preamble of claim 1 is known from US 2006/0262112 wherein a deformation module is used for application of an free-form deformation on an input set of CT scans of the object using a template geometry for the geometry of the object and an optimization module for determining a combination of free-form deformation parameters corresponding to the deformed three-dimensional shape that matches the input set of CT scans of the object.

Another method with the features of the preamble of the present application relates to a method and device for determining a three-dimensional form of a body from two-dimensional projection images as published in US 2005/0015003. This method starts working on at least one x-ray image wherein the data is generated based on the contour of the image as well as on intermediate points from said image relating to depth values for the 3D-body. Said disclosure uses as staring point WO 01/22368 to provide a more precise form of the shape to be generated. Based on that document, the inventors of US 2005/0015003 have seen that any x-ray image provides more information than the simple contour image and therefore, additional depth related information from the inner part are used, especially as existing color differences in the inner part of the image.

A further prior art document is US 2013/0223720 disclosing a method and system for determining a boundary surface network providing such a network for a tubular object based on image data and local dimension information points.

A free-form body is, according to the Merriam Webster dictionary, a form, created in any chosen way and not being required to have a particular pattern or form, especially having an irregular or asymmetrical shape or design.

### SUMMARY OF THE INVENTION

It is noted that the closed curves can be provided in the three-dimensional space. It is a preferred application that the curves can be retrieved from views comprising at least two two-dimensional images, but the images are not necessarily in a flat plane; it can be a curved plane and an image or view within this curved plane is defined in the context of the present application to be a 2D image.

Based on the above mentioned prior art it is an object of the invention to further improve the generated shape of such a 3D image based on 2D images and especially to provide a quicker way to generate such a 3D image with less 2D images. A further object of the invention is a quicker and/or more accurate way to calculate the volume of such a three dimensional body, represented by a number of 2D images of the real object.

This object is achieved inter alia with a method according to the prior art having the features that there are at least two images planes, inter alia curved planes, wherein there is one set of closed curves in every plane, wherein the method further comprises the steps of:
- estimating for each of the closed curves initial surface normals,
- regularizing every closed curve, especially finding a common point and common normal at every point where two or more of the curves intersect, and apply this information to all estimated normals to make a consistent model,

- using of a radial basis function to define an implicit form of the volume as a zero set of the signed distance function defined by the curves and normals; and
- polygonalizing said zero set by providing a level set discretization method in 3D in the bounding box of the curves yielding a clipped, especially by the bounding box, or naturally curved bounded volume.

In an advantageous embodiment the at least two images planes are intersecting one the other, wherein every closed curve is regularized at crossing points with any other closed curve, and wherein especially the implicit function is defined given by points on the curves and the estimated surface normal at each of the crossing points on the curves.

In an advantageous embodiment the level set discretization method in 3D are marching tetraheadrons.

The advantage of the present method is that the accuracy of the volume is determined by the general cell size of the discretization method, inter alia marching tetraheadrons, the support grid of the radial basis functions and the sampling density of the curves, which are preferredly all about the same size as the voxel spacing of the underlying basic data and especially radiological data. When the cell size of the chosen discretization method, the support grid of the radial basis functions and the sampling density of the curves are within the same order of magnitude as the size of the voxel spacing of the underlying basic data, the 3D volume can be determined in a quick and accurate way in relationship to the existing data of the views.

It is an advantage of the present invention that such a 3D shape can be provided on the basis of only two or some more images depending on the necessary accuracy but with a very reduced set of data compared to prior art procedures. This enables a shorter time for the person to be e.g. in the CT-scanner, if a CT scanner is used to generate the 2D images, since only a reduced number of images might be sufficient. Then these images can be used to determine the form of a specific element in the scanned body part, e.g. a tumor. The present method then allows a quick calculation and good estimate of the volume of this scanned shape. This figure relating to the volume is one important result of such a CT examination and the shorter the scanning is, since less pictures are taken, the cheaper is the evaluation of the size of the element detected and scanned in the body of the person.

The invention allows the preparation of very accurate 3D images of any free-form object. Inter alia such object can be a kidney stone, a tumor, a bone part or any other object for which the volume is to be determined as part of the anamnesis.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1a: shows a free-form three dimensional shape to be generated by a method according to an embodiment of the invention defined by non-intersecting planar curves;
- Fig. 1b: shows a free-form three dimensional shape to be generated by a method according to an embodiment of the invention using intersecting planar curves;
- Fig. 2: shows one a two-dimensional image used in the construction of the view according to Fig. 1b;
- Fig. 3: shows a line drawing based on the image of Fig. 2;
- Fig. 4: shows a computing device for executing the method according to the invention.

### DESCRIPTION OF PREFERRED EMBODIMENTS

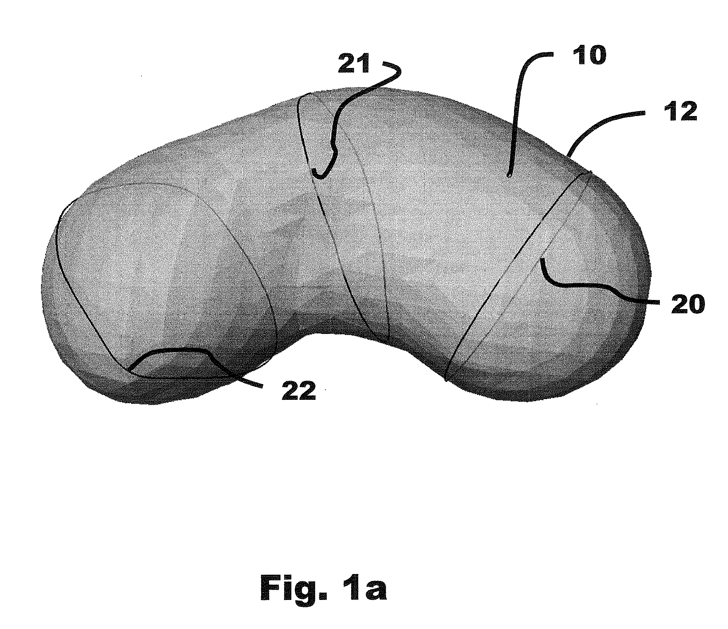

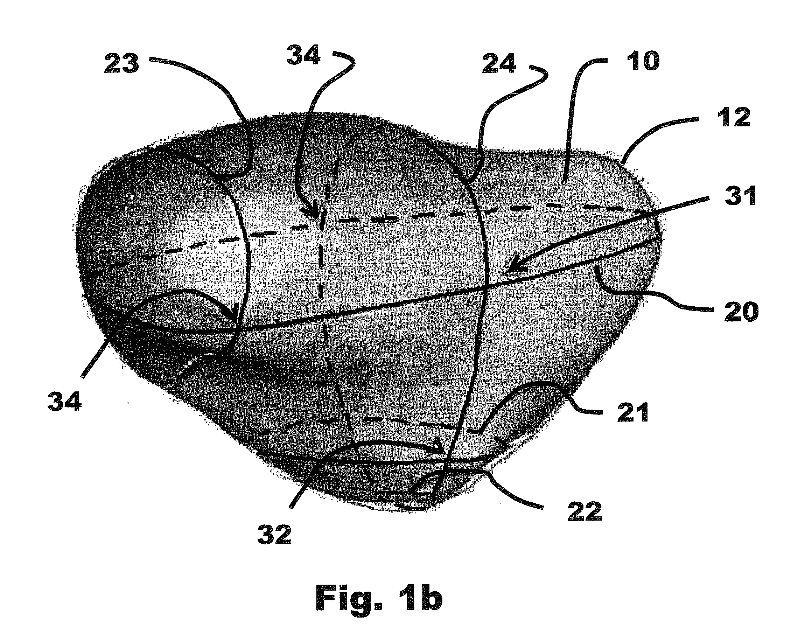

Fig. 1a and Fig. 1b show a free-form three dimensional shape or 3D virtual body 10 to be generated by a method according to an embodiment of the invention. Therefore, Fig. 1a as well as Fig. 1b show the result to be achieved, but the 2D closed surfaces 20, 21, 22, 23 and 24 are examples of data sets taken from images taken from the physical body to be studied. Fig. 1a and Fig. 1b show closed curved within a flat plane, e.g. a section within the 3D space. It is also possible in a more general approach that the closed curve are not positioned in a section or flat plane but within a curved plane, being nevertheless a (curved) 2D surface in the 3D space.

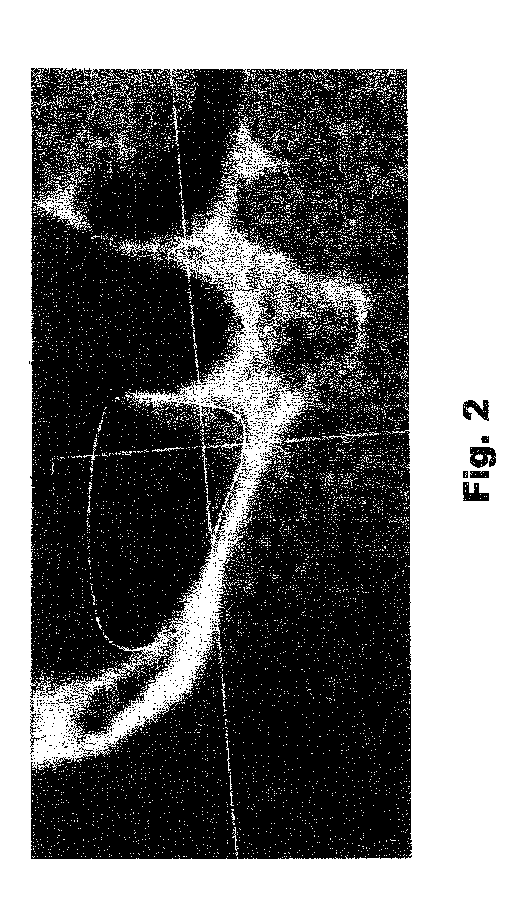

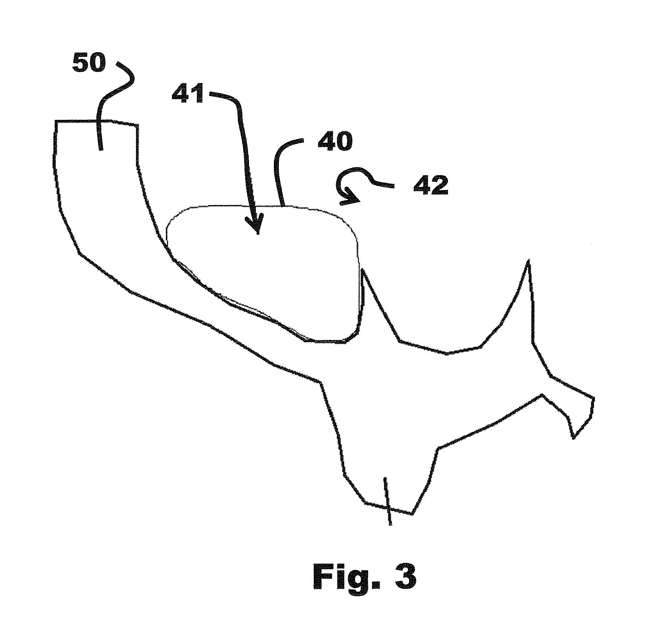

Fig. 2 shows one such a two-dimensional image used in the construction of the view according to Fig. 1b. Fig. 3 shows a line drawing of the two-dimensional image of Fig. 2 Said two-dimensional image 50 comprises one specific 2D closed surface line 40. Said line 40 delimits the interior 42 of the object to be represented and the environment 41 or portion exterior to the interior body 42. The view 50 is digitized into a data set. The specific 2D closed surface line 40 can be detected automatically or manually. It is only important that a coordinate system is available, here represented by a cross in the image of Fig. 2, which defines the plan of the image in the 3D space.

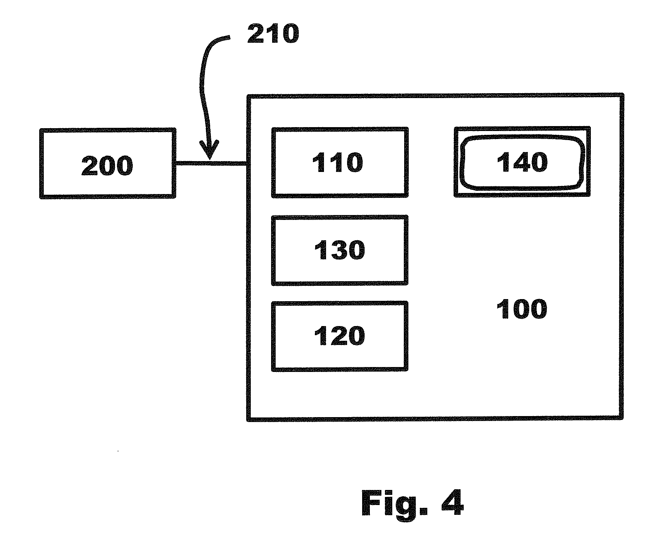

Fig. 4 shows a computing device for executing the method according to the invention. Then, a database in a memory 120 of a computing device 100 comprises information relating to the plan in the predetermined coordinate system 60 and a data set relating to the specific 2D closed surface line 40. This data set is generated by e.g. taking the picture 50 with an imaging unit 200 which can be a CT scanner, connected to the computing device 100 with a data connection line 210. The control unit 110 then handles and stores the data set. The specific 2D closed surface line 40 can be detected automatically by detecting colour/grey scale differences defining a body interior 42. This can be supported by input given by an operator at input device 130, especially in connection with a representation of the image on an output device 140. The input device 130 can be a mouse or keyboard or graphic tablet, the output device 140 is usually a computer screen. He input can consist on tapping in the inside of the body to be represented or the contour of the body is roughly followed and specific colour/hue differences are detected and the closed contour surfaces 40 chosen.

At least two of such images 50 are stored in the memory 120. This can be determined through application of the different coordinate systems 60 connected to the 2D images 50.

In the embodiment of Fig. 1b the planes of at least two of such images 50 intersect.

Two or more of such images 50 are then provided in a virtual three dimensional space as represented in Fig. 1. The data sets comprise a plurality of sets of closed curves 20, 21, 22, 23, 24 here represented and provided in the virtual space of Fig. 1: the sets 20, 21 and 22 are parallel to each other; the sets 34 and 24 are parallel to each other but are provide in an angle of here approximately 90 degrees to the earlier mentioned sets. Therefore, the different sets intersect each other, providing intersection points 31, 32, 33 and 34 and some more. The method then further comprises the step of estimating for each of the closed curves 20, 21, 22, 23, 24 initial surface normal. These closed curves 20, 21, 22, 23, 24 are regularized at the crossing points 31, 32, 33, 34 with any other closed curve 20, 21, 22, 23, 24.

The regularization comprises estimating a common point at each crossing point 31, 32, 33, 34 with any other closed curve and modifying the curve shape of the closed curves or the crossing curves to pass through the estimated common point. Wherein the regularization of every closed curve comprises in the case of intersecting curves finding a common point and common normal at every point where two or more of the curves intersect, and apply this information to all estimated normals to make a consistent model.

Then a radial basis function is used to define an implicit form of the volume as a zero set defined by the radial basis function and finally, said zero set is polygonalized by marching tetraheadrons in the bounding box of the curves yielding a clipped or naturally bounded volume 12.

**LIST OF REFERENCE SIGNS**

| | | | |
|---|---|---|---|
| 10 | 3D virtual body | 40 | 2D planar closed curve |
| 12 | 3D boundary surface of the body | 41 | exterior of the body |
| | | 42 | interior of the body |
| 20 | 2D planar closed curve | 50 | image |
| 21 | 2D planar closed curve | 100 | computing device |
| 22 | 2D planar closed curve | 110 | control unit |
| 23 | 2D planar closed curve | 120 | memory |
| 24 | 2D planar closed curve | 130 | input device |
| 31 | intersection point | 140 | output device |
| 32 | intersection point | 200 | imaging unit |
| 33 | intersection point | 210 | data connection line |
| 34 | intersection point | | |

## Claims

1. A method for three-dimensional shape generation from closed curves, especially closed curves defined in planar slice images called views, comprising the steps of:
- providing at least two, preferably two-dimensional, images (50) encompassing and showing the object (42) to be represented within said three-dimensional shape (10), and
- calculating based on the closed curves derived from, preferably two-dimensional, images (50) the three-dimensional shape (10) of the object (41) to be represented, **characterized in that** there is one set of closed curves (20, 21, 22, 23, 24) in every plane, wherein the method further comprises the steps of:
- estimating for each of the closed curves (20, 21, 22, 23, 24) initial surface normals,
- regularizing every closed curve (20, 21, 22, 23, 24),
- using of a radial basis function to define an implicit form of the volume as a zero set of the signed distance function given by points on the closed curves and the estimated surface normal at each of the points on the closed curves; and
- polygonalizing said zero set by providing a level set discretization method in 3D in the bounding box of the curves yielding a clipped, especially by the bounding box, or naturally bounded volume (12).

2. The method according to claim 1, wherein in the case that two or more of the closed curves intersect, regularizing of every closed curve comprises finding a common point and common normal at every point where two or more of the curves intersect, and apply this information to all estimated normals to make a consistent model,

3. The method according to claim 1 or 2, wherein the at least two of the image planes are intersecting one the other, wherein regularization comprises regularizing every closed curve (20, 21, 22, 23, 24) at crossing points (31, 32, 33, 34) with any other closed curve (20, 21, 22, 23, 24).

4. The method according to claim 1 to 3, wherein the implicit function is defined given by points on the curves and the estimated surface normal at each of the crossing points on the curves.

5. The method according to any one of claims 1 to 4, wherein the level set discretization method in 3D are marching tetraheadrons.

6. The method according to claim 5, wherein the general size of the marching tetraheadrons, the support grid of the radial basis functions and the sampling density of the curves are all within the same order of magnitude as the voxel spacing of the underlying basic data of the views.

7. The method according to any one of claims 1 to 6, wherein regularization comprises estimating a common point at each crossing point of the closed curves and modifying the curve shape of the closed curves or the crossing curves to pass through the estimated common point(s).

8. The method according any one of claims 1 to 7, wherein a further calculation step follows the polygonalizing wherein the value of the volume related to the data set of the bounded volume is calculated to be used as estimate of the volume of the scanned three-dimensional shape of the object to be represented.

9. A system for the three-dimensional shape generation from views with a method according to claim 1 to 8, based on a data set of at least two two-dimensional images (50), comprising a computing device (100), the computing device (100) comprising a control unit (110), an input device (130), an output device (140) and a memory (120), wherein the a computing device (100) is connected (210) with an imaging unit (200) to capture the at least two two-dimensional images (50), wherein the control unit (110) is configured to receive data of the at least 2D images (50) as data sets, to determine the contour (40) of each of the 2D images (50) within the data set, wherein the control unit is configured to determine the orientation in the 3D space of the contours of the different data sets, wherein at least two 2D images sets are not oriented in parallel planes in the 3D space, wherein the control unit is configured to determine interpolated 3D points of the underlying 3D object (10).
